(19) Europäisches Patentamt
European Patent Office
Office européen des brevets

(11) EP 0 767 813 B1

(12) FASCICULE DE BREVET EUROPEEN

(45) Date de publication et mention de la délivrance du brevet: **28.06.2000 Bulletin 2000/26**

(21) Numéro de dépôt: **96915077.0**

(22) Date de dépôt: **23.04.1996**

(51) Int Cl.⁷: **C08L 19/00**, C08L 9/02, C08L 71/03

(86) Numéro de dépôt international: **PCT/FR96/00618**

(87) Numéro de publication internationale: **WO 96/34048 (31.10.1996 Gazette 1996/48)**

# (54) CAOUTCHOUCS VULCANISES MODIFIES PAR DES THERMOPLASTIQUES

MIT THERMOPLASTEN MODIFIZIERTES VULKANISIERTES GUMMI

VULCANISED THERMOPLASTIC-MODIFIED RUBBERS

(84) Etats contractants désignés: **AT BE CH DE DK ES FI FR GB GR IE IT LI LU NL PT SE**

(30) Priorité: **28.04.1995 FR 9505125**
**21.12.1995 FR 9515244**

(43) Date de publication de la demande: **16.04.1997 Bulletin 1997/16**

(73) Titulaire: **ELF ATOCHEM S.A.**
**92800 Puteaux, Hauts-de-Seine (FR)**

(72) Inventeurs:
- **BETREMIEUX, Isabelle**
  **F-27270 Beaumontel (FR)**
- **ALEX, Patrick**
  **F-91470 Limours-Pecqueuse (FR)**
- **MARCQ, Philippe**
  **F-27300 Bernay (FR)**
- **DOUSSON, Christian**
  **F-27300 Bernay (FR)**

(74) Mandataire: **Neel, Henry**
**Elf Atochem S.A.,**
**4-8, Cours Michelet,**
**La Défense 10**
**F-92800 Puteaux (FR)**

(56) Documents cités:
**EP-A- 0 251 791**
**EP-A- 0 364 859**
**DE-A- 3 409 414**
**FR-A- 2 590 586**
**US-A- 4 297 453**
**US-A- 5 239 004**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 767 813 B1

## Description

La présente invention concerne des caoutchoucs vulcanisés modifiés par des thermoplastiques, et plus particulièrement, des mélanges vulcanisés (i) de caoutchoucs fonctionnalisés et (ii) de thermoplastiques. Ils peuvent être préparés par incorporation du thermoplastique à l'état fondu dans le caoutchouc puis on procède à la vulcanisation.
Dans le domaine des caoutchoucs, il peut être intéressant pour certaines applications (pneus, bandes transporteuses....) de pouvoir augmenter la contrainte aux faibles allongements sans rencontrer des problèmes d'échauffement à la mise en oeuvre et en sollicitation dynamique des pièces vulcanisées ou de vieillissement qui sont générés par les solutions classiques telles que le renforcement par le noir de carbone ou par un taux de réticulation important.
Le brevet US 5 239 004 explique qu'on peut modifier des caoutchoucs naturels, SBR (styrène-butadiène), X-NBR (nitrile-butadiène carboxylé) ou EPDM (éthylène-propylène-diène) par des dithiodiacides et des copolymères à blocs polyéther et blocs polyamide. Cette modification est une augmentation du module à 50, 100 et 300 % d'allongement. Les exemples ne concernent que du caoutchouc naturel qu'on a mélangé avec 1 % en poids d'acide dithiodipropionique. Puis, dans ce caoutchouc, on ajoute 4 % en poids, soit de différents copolymères à blocs polyéther et blocs polyamide, soit de polyamide 12 et ensuite on vulcanise .
On observe un gain sur les modules à 50, 100 et 300 % d'allongement, par contre, on note une chute de 20 à 35 % de la contrainte à la rupture.
Les compositions de la présente invention ont aussi des modules à 50, 100 et 300 % nettement augmentés, mais elles présentent une meilleure contrainte à la rupture.
La présente invention décrit l'amélioration de certaines propriétés du caoutchouc (renforcement, résistance à la déchirure...) sans utiliser de dithiodiacide, tout en ayant une dispersion très fine et homogène du thermoplastique dans le réseau caoutchouc.
EP 40060 décrit des mélanges thermoplastiques de polyamides 6,66 ou 6,66, 610 avec des caoutchoucs épichlorhydrine. Ce sont des matrices de polyamide contenant des nodules de caoutchouc épichlorhydrine. Les exemples comparent les mélanges avec les nodules vulcanisés et les mélanges avec les nodules non vulcanisés.
Les produits de l'invention ne sont pas thermoplastiques.
La présente invention concerne la modification de caoutchoucs par un ou plusieurs thermoplastiques. Les thermoplastiques sont choisis de telle sorte qu'ils soient compatibles avec les caoutchoucs. Cette modification permet d'améliorer certaines propriétés du caoutchouc tout en maintenant ses propriétés élastomériques (Déformation Rémanente à la compression, Allongement à la rupture) et sa tenue aux huiles :

- Augmentation du "green strength" ou module aux faibles allongements du caoutchouc à cru, c'est-à-dire avant vulcanisation.
- Augmentation du module aux faibles allongements du caoutchouc vulcanisé ou effet renforçant.
- Amélioration de la résistance au déchirement et de la contrainte à la rupture.
- Augmentation de la dureté.

De plus, dans certains cas, en particulier dans celui du XNBR, l'incorporation de thermoplastique du type copolymère à blocs polyamides et blocs polyéther, en plus de toutes les améliorations citées ci-dessus, apporte une nette amélioration du comportement à froid, tel que l'allongement.
La présente invention est donc un mélange vulcanisé ;

(i) d'au moins un caoutchouc fonctionnalisé choisi parmi le NBR (nitrile - butadiène), le H-NBR (nitrile - butadiène hydrogéné), le X-NBR (nitrile - butadiène carboxylé) et les caoutchoucs épichlorhydrine et
(ii) au moins un thermoplastique en quantité suffisante pour augmenter le module aux faibles allongements mais telle que la contrainte à la rupture n'est pas diminuée de plus de 10 %.

Le caoutchouc (i) formant la matrice dans laquelle est dispersé le thermoplastique (ii) sous forme de nodules.
Le mélange du caoutchouc fonctionnalisé et du thermoplastique est effectué avant la vulcanisation. L'agent de vulcanisation et les catalyseurs éventuels sont introduits ensuite puis on vulcanise. Les agents et les catalyseurs peuvent être introduits dès le mélange avec le thermoplastique si ils ne sont pas actifs aux températures obtenues lors du mélange.
On peut aussi utiliser un mélange de l'un des caoutchoucs précédents avec un caoutchouc non fonctionnalisé tel que le styrène-butadiène (SBR), le caoutchouc naturel ou l'éthylène-propylène-diène (EPDM).
Les caoutchoucs épichlorhydrine sont décrits dans le KIRK-OTHMER Encyclopedia of Chemical Technology 3ème édition Vol. 8, Chapitre ELASTOMERS pages 568 et suivantes.
Ce sont des polymères à motifs épichlorhydrine et pouvant contenir aussi des motifs oxyde d'éthylène, oxyde de propylène ou oxyde de propylène substitué.

De préférence, la quantité de fonctions du caoutchouc est comprise en poids entre 0,3 et 10 % du poids du caoutchouc fonctionnalisé ou de l'ensemble caoutchouc fonctionnalisé-caoutchouc non fonctionnalisé.

Le thermoplastique est défini comme le produit qui augmente le module du caoutchouc fonctionnalisé aux faibles allongements, c'est-à-dire que le module du mélange vulcanisé de l'invention est supérieur au module du caoutchouc fonctionnalisé (i) et vulcanisé. Cette augmentation peut être d'un facteur 10 pour des allongements jusqu'à 300 %.

Simultanément, le thermoplastique n'affecte pas la contrainte à la rupture de plus de 10 %, c'est à dire que la contrainte à la rupture du mélange vulcanisé de l'invention n'est pas inférieure de plus de 10 % par rapport à la contrainte à la rupture du caoutchouc fonctionnalisé (i) vulcanisé. Le plus souvent, cette contrainte est même améliorée.

A titre d'exemple de thermoplastique, on peut citer les copolyétheresters. Ce sont des copolymères ayant des motifs polyéthers dérivés de polyétherdiols tels que le polyéthylène glycol (PEG), le polypropylène glycol (PPG) ou le polytétraméthylène glycol (PTMG), des motifs diacide carboxylique tels que l'acide téréphtalique et des motifs glycol (éthane diol) ou butane diol, 1-4. L'enchaînement des polyéthers et des diacides forme les segments souples alors que l'enchaînement du glycol ou du butane diol avec les diacides forme les segments rigides du copolyétherester.

De tels copolyétheresters sont décrits dans les brevets EP 402 883 et EP 405 227 dont le contenu est incorporé dans la présente demande.

Comme thermoplastique, on peut encore citer les polyétheruréthannes, par exemple, ceux comprenant des motifs diisocyanates, des motifs dérivés de polyéther diols et des motifs dérivés de l'éthane diol ou du butane diol,1-4.

On peut encore citer les polyesteruréthannes par exemple ceux comprenant des motifs diisocyanates, des motifs dérivés de polyesters diols amorphes et des motifs dérivés de l'éthane diol ou du butane diol, 1-4.

Le thermoplastique peut aussi être un polyamide.

On entend par polyamide les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;

ou des mélanges de certains de ces monomères ce qui conduit à des copolyamides.

On peut utiliser des mélanges de polyamide. On utilise avantageusement le PA-11, le PA 12 et le copolyamide à motifs 6 et motifs 12 (PA-6/12).

Le thermoplastique peut être aussi un mélange de polyamide et de polyoléfines. Le polyamide peut être choisi parmi les précédents.

On entend par polyoléfines des polymères comprenant des motifs oléfines tels que par exemple des motifs éthylène, propylène, butène-1, etc...

A titre d'exemple, on peut citer :

- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

Ces copolymères de l'éthylène pouvant être greffés par des anhydrides d'acides dicarboxyliques insaturés ou des époxydes insaturés.

- les copolymères blocs styrène / éthylène-butène / styrène (SEBS) éventuellement maléisés.

On peut utiliser des mélanges de deux ou plusieurs de ces polyoléfines.

On utilise avantageusement :

- le polyéthylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant

greffé ou copolymérisé,

- les copolymères de l'éthylène / d'un (méth)acrylate d'alkyle / du méthacrylate de glycidyle, le méthacrylate de glycidyle étant greffé ou copolymérisé,
- le polypropylène.

Il est recommandé, pour faciliter la formation de la matrice de polyamide, et si les polyoléfines ont peu ou pas de fonctions pouvant faciliter la compatibilisation, d'ajouter un agent compatibilisant.
L'agent compatibilisant est un produit connu en soi pour compatibiliser les polyamides et les polyoléfines.
On peut citer par exemple :

- le polyéthylène, le polypropylène, les copolymères éthylène propylène, les copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé.
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.
La quantité de polyamide formant la matrice peut être comprise entre 55 et 95 parties pour 5 à 45 parties de polyoléfines.
La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères par mélange de polyamide, de polyoléfine et éventuellement de compatibilisant selon les techniques usuelles de mélange à l'état fondu (bi vis, Buss, monovis).
Avantageusement, le mélange comprend une matrice de polyamide 6 (PA-6) ou 66 (PA-6,6) dans laquelle sont dispersés, soit des nodules d'un mélange de polyéthylène basse densité et de copolymère d'éthylène de (méth) acrylate d'alkyl et d'anhydride maléique ou de méthacrylate de glycidyle, soit des nodules de polypropylène.
De tels produits sont décrits dans les brevets US 5 070 145 et EP 564 338.
Dans le cas du polypropylène, on ajoute un comptabilisant qui est avantageusement un copolymère éthylène / propylène majoritaire en nombre de motifs propylène, greffé par l'anhydride maléique, puis condensé ensuite avec des oligomères mono aminés de caprolactame.
Ces mélanges de polyamide et de polyoléfine peuvent être plastifiés et éventuellement contenir des charges telles que du noir de carbone, etc.
De tels mélanges de polyamide et de polyoléfine sont décrits dans le brevet US 5 342 886.
A titre d'exemple de thermoplastique, on peut encore citer les polymères à blocs polyamide et blocs polyéther.
Les polymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne. Avantageusement, les blocs polyamides sont en polyamide-12 ou en polyamide-6.
La masse molaire en nombre $\overline{M_n}$ des séquences polyamides est comprise entre 300 et 15 000 et de préférence

entre 600 et 5 000. La masse $\overline{M_n}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 250° C pour une concentration initiale de 0,8 g/100 ml.

Que les blocs polyéthers dérivent du polyéthylène glycol, du polyoxypropylène glycol ou du polyoxytétraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

Que les blocs polyéther soient dans la chaîne du polymère à blocs polyamides et blocs polyéther sous forme de diols ou de diamines, on les appelle par simplification blocs PEG ou blocs PPG ou encore blocs PTMG et les polymères à blocs PA-6 et blocs PTMG.

On ne sortirait pas du cadre de l'invention si les blocs polyéther contenaient des motifs différents tels que des motifs dérivés de l'éthylène glycol ( $-OC_2H_4-$), du propylène glycol

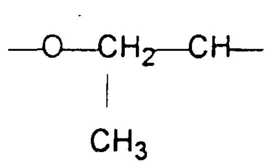

ou encore du tétraméthylène glycol ($-O-(CH_2)_4-$).

De préférence, le polymère à blocs polyamides et blocs polyéther comprend un seul type de bloc polyamide et un seul type de blocs polyéther. On utilise avantageusement des polymères à blocs PA-12 et blocs PTMG et des copolymères à blocs PA-6 et blocs PTMG.

On peut aussi utiliser un mélange de ces deux polymères à blocs polyamides et blocs polyéther.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50 % en poids ou plus du polymère à blocs polyamides et blocs polyéthers. Avantageusement, la quantité de polyamide et la quantité de polyéther sont dans le rapport (polyamide/polyéther) 1/1 à 3/1.

Ce thermoplastique peut aussi comprendre des plastifiants, des anti oxydants ou des anti U.V.

Le thermoplastique peut être aussi un mélange d'au moins un polymère à blocs polyamides et blocs polyéther et d'au moins une polyoléfine. Cette polyoléfine et éventuellement un agent compatibilisant peuvent être choisis parmi ceux cités plus haut à propos des mélanges de polyamides et de polyoléfines.

Le thermoplastique peut être aussi un mélange de polyamide et de polymère à blocs polyamides et blocs polyéther, ces produits pouvant être choisis parmi les produits déjà cités plus haut.

Le thermoplastique peut être aussi un polymère à blocs polyamide et blocs polyester amorphe. On peut le préparer par condensation de blocs polyamides à extrémités acide carboxylique avec des polyesters diols.

La quantité de thermoplastique peut être par exemple jusqu'à 60 parties pour 100 parties de caoutchouc non formulé c'est-à-dire de 100 parties de XNBR ou HNBR par exemple

On observe des effets sensibles déjà pour quelques parties. L'augmentation du module varie avec l'augmentation de la quantité de thermoplastique. Habituellement, cette quantité est comprise entre 5 et 50 parties selon les performances recherchées.

Au sens de l'invention, les faibles allongements sont des allongements inférieurs à 350 % et de préférence compris entre 50 et 300 %.

La contrainte à la rupture (du mélange vulcanisé de l'invention) peut chuter de moins de 10 % pour des quantités de thermoplastique voisines de 5 pour 100 parties de caoutchouc non formulé puis augmenter pour des valeurs croissantes de thermoplastiques et dépasser la contrainte à la rupture du caoutchouc sans thermoplastique. Cette baisse suivie d'une remontée et une augmentation par rapport au caoutchouc sans thermoplastique s'observe pour des thermoplastiques tels que les polymères à blocs PA-12 et blocs PTMG. Pour les autres thermoplastiques en particulier les polymères à blocs PA-6 et blocs PTMG, le PA-11 et le PA-12, il y a toujours une augmentation de la contrainte à la rupture par rapport au caoutchouc ne contenant pas de thermoplastique.

Le mélange de l'invention se présente sous la forme d'une matrice de caoutchouc et de nodules de thermoplastique. Ces nodules ont avantageusement une taille inférieure à 1 μm.

La résistance à la déchirure est une fonction croissante de la quantité de thermoplastique alors que si on dope par du noir de carbone au lieu du thermoplastique la résistance au déchirement augmente avec la quantité de noir puis passe par un maximum et chute toujours pour des quantités croissantes de noir.

Le mélange de l'invention présente aussi de bonnes propriétés dynamiques comparées avec un dopage au noir de carbone, ainsi le pourcentage d'hystérèse est diminué.

Ainsi, on observe le faible échauffement interne du mélange de l'invention soumis à des sollicitations dynamiques en particulier en compression alors que ce n'est pas vrai pour le noir de carbone.

Les mélanges de l'invention soumis à des tests de sollicitations dynamiques selon NFT 46.045 présentent une tangente $\delta$ inférieure aux caoutchoucs sans thermoplastique et aux caoutchoucs dopés au noirs de carbone.

Un autre avantage de l'invention est la bonne tenue aux huiles, en particulier le gonflement dans l'huile est inférieur à celui du caoutchouc non chargé en thermoplastique, y compris pour les caoutchoucs HNBR et XNBR.

Ceci est d'autant plus remarquable que ces caoutchoucs sont considérés comme étant les plus résistants aux huiles.

La préparation du caoutchouc modifié de l'invention peut être réalisée en une ou deux étapes, en effet l'incorporation du thermoplastique peut être menée avant ou pendant la formulation du caoutchouc.

Le thermoplastique est incorporé à une température suffisante pour qu'il soit à l'état fondu. Puis on malaxe jusqu'à obtenir une dispersion dans la matrice de caoutchouc.

On choisit avantageusement le thermoplastique pour que sa température de fusion soit proche de celle du caoutchouc non formulé ou de la température de compoundage du caoutchouc formulé. On peut aussi procéder par une étape intermédiaire de mélanges maîtres non vulcanisés caoutchouc/thermoplastique qu'on incorpore ensuite dans le reste du caoutchouc.

Le temps de malaxage est compris entre 1 et 10 minutes et de préférence entre 5 à 8 minutes.

L'alliage obtenu est à matrice caoutchouc et peut ensuite être formulé sur cylindres comme un caoutchouc classique, avec l'avantage par rapport au caoutchouc de départ d'une mise en oeuvre plus facile du fait de l'augmentation du green strength ou module aux faibles allongements par l'incorporation de thermoplastiques.

Suivant les applications visées, le caoutchouc peut avantageusement être formulé avec du noir de carbone ou des charges claires, avec des résines tackifiantes, des additifs de type processing aids tels que le polyéthylène glycol, l'acide stéarique, l'oxyde de zinc...

La vulcanisation de ces formulations peut se faire par des systèmes au soufre en présence d'accélérateurs ou non, par des peroxydes avec ou sans coagent ou encore par des résines formophénoliques. Le choix du système de vulcanisation dépend de la nature du caoutchouc et de la cinétique de vulcanisation souhaitée aux températures de mise en oeuvre.

Si la température de vulcanisation est soit sensiblement la même que celle de malaxage du caoutchouc et du thermoplastique (avant vulcanisation) soit supérieure, on peut incorporer les accélérateurs tels que les peroxydes au cours de ce malaxage ou lors de la formulation du caoutchouc avant d'y incorporer le thermoplastique.

Si la température de vulcanisation est sensiblement inférieure à celle de malaxage du caoutchouc et du thermoplastique, alors on préfère incorporer les accélérateurs après refroidissement du mélange caoutchouc formulé et thermoplastique. On peut faire cette incorporation sur cylindres, puis on procède à la vulcanisation.

Une fois vulcanisé, Une augmentation importante du module aux faibles allongements du caoutchouc modifié est constatée. Cet effet renforçant du thermoplastique peut être intéressant dans le domaine des pneus, des bandes transporteuses... où une résistance importante du matériau est recherchée.

Les systèmes de vulcanisation sont connus en eux-mêmes, on peut utiliser par exemple ceux décrits dans le brevet EP 550 346 dont le contenu est incorporé par référence dans la présente demande.

La présente invention concerne aussi des mélanges maîtres de caoutchouc et de thermoplastique non vulcanisés. Ce sont les mélanges décrits ci-dessus sauf que la teneur en thermoplastique est plus élevée. Ces mélanges maîtres sont ensuite incorporés dans le caoutchouc puis on vulcanise.

***Exemples***

Dans les exemples suivants, le caoutchouc ECO est un terpolymère type GECO à motifs oxyde d'éthylène, épichlorydrine et ally glycidyle éther. Il s'agit de l'hydrine T70X1 de Nippon Zeon.
Le HNBR employé pour réaliser les exemples est le ZETPOL 2000 de Nippon Zeon.
Le XNBR est le CHEMIGUM PX 7439, qualité poudre du NX775 de Good Year, contenant 10% de carbonate de calcium.
Le Pebax 1 (polyamide bloc éther 1) utilisé est constitué de 50% de séquences polyamide 12 (Mn = 1000) et de 50% de séquences polytétraméthylène glycol (Mn = 1000) et est caractérisé par un point de fusion de 147°C et une viscosité intrinsèque de 1,60, mesurée à la concentration de 0,5 g/100 g dans le métacrésol à 25°C.
Le Pebax 2 (polyamide bloc éther 2) utilisé est constitué de 80% de séquences polyamide 12 (Mn = 4000) et de 20% de séquences polytétraméthylène glycol (Mn = 1000) et est caractérisé par un point de fusion de 170°C et une viscosité intrinsèque de 1,40, mesurée à la concentration de 0,5 g/100 g dans le métacrésol à 25° C.
Le Pebax 3 (polyamide bloc éther 3) utilisé est constitué de 66% de séquences polyamide 6 (Mn = 1300) et de 34% de séquences polytétraméthylène glycol (Mn = 650) et est caractérisé par un point de fusion de 195°C et une viscosité intrinsèque de 1,55, mesurée à la concentration de 0,5 g/100 g dans le métacrésol à 25° C.
Le Pebax 4 (polyamide bloc éther 4) utilisé est constitué de 80% de séquences polyamide 6 (Mn = 2600) et de 20% de séquences polytétraméthylène glycol (Mn = 650) et est caractérisé par un point de fusion de 207°C et une viscosité intrinsèque de 1,52, mesurée à la concentration de 0,5 g/100 g dans le métacrésol à 25° C.

**Propriétés mécaniques.**

***Exemple 1***

Dans un malaxeur Brabender, on malaxe pendant 7 à 8 minutes à 165°C, 90% de caoutchouc HNBR et 10% de polyamide bloc éther 1. Le caoutchouc modifié est ensuite formulé à 30°C sur un mélangeur à cylindres selon la composition suivante en parts :

| | |
|---|---|
| Zetpol 2000 | 100 |
| Pebax 1 | 11.1 |
| Kaolin calciné | 30 |
| Silane A187 | 1 |
| PEG 4000 | 1 |
| Acide stéarique | 0.55 |
| Oxyde de zinc | 3.33 |
| Perkadox 1440 | 6.7 |
| TiO2 | 5 |

***Exemple 2***

On procède de la même façon que dans l'exemple 1 en incorporant 20% de Pebax 1 dans l'HNBR lors de la première étape et en suivant la composition ci-dessous pour la deuxième étape de formulation :

| | |
|---|---|
| Zetpol 2000 | 100 |
| Pebax 1 | 25 |
| Kaolin calciné | 30 |
| Silane A187 | 1 |
| PEG 4000 | 1 |
| Acide stéarique | 0.65 |
| Oxyde de zinc | 3.75 |
| Perkadox 1440 | 7.5 |
| TiO2 | 5 |

Les mélanges des exemples 1 et 2 ainsi qu'un témoin ne contenant pas de Pebax 1 ont été vulcanisés en statique sur presse à 180°C sous 90 bars pendant 12 minutes, pour faire des plaques de 2 mm d'épaisseur. les propriétés mécaniques ont été mesurées à 23°C sur des éprouvettes réalisées à partir de ces plaques.

Tableau 1 :

| Propriétés du HNBR modifié par du Pebax 1 | | | | | | |
|---|---|---|---|---|---|---|
| **Echantillon** | **Module 50% MPa** | **Module 100%MPa** | **Module 300%MPa** | **Contrainte rupture MPa** | **Résistance déchirement N/mm** | **Allongement rupture %** |
| Témoin1 sans Pebax1 | 1.0 | 1.3 | 3.7 | 12.4 | 28.7 | 742 |
| Exemple 1 | 1.3 | 1.8 | 4.9 | 13.1 | 31.8 | 726 |
| Exemple 2 | 1.8 | 2.4 | 5.5 | 14.8 | 38.4 | 733 |

***Exemple 3***

Dans un malaxeur Brabender, on malaxe pendant 7 à 8 minutes à 165°C, 90% de caoutchouc XNBR et 10% de polyamide bloc éther 1. Le caoutchouc modifié est ensuite formulé à 30°C sur un mélangeur à cylindres selon la composition suivante en parts :

| | |
|---|---|
| XNBR PX7439 | 110 |
| Pebax 1 | 11.1 |
| Kaolin calciné | 30 |
| Silane A187 | 1 |
| PEG 4000 | 1 |
| Acide stéarique | 0.55 |
| Oxyde de zinc | 3.33 |
| Perkadox 1440 | 0.83 |
| TiO2 | 5 |

***Exemple 4***

On procède de la même façon que dans l'exemple 3 en incorporant 20% de Pebax 1 dans l'XNBR lors de la première étape et en suivant la composition ci-dessous pour la deuxième étape de formulation :

| | |
|---|---|
| XNBR PX7439 | 110 |
| Pebax 1 | 25 |
| Kaolin calciné | 30 |
| Silane A187 | 1 |
| PEG 4000 | 1 |
| Acide stéarique | 0.65 |
| Oxyde de zinc | 3.75 |
| Perkadox 1440 | 0.94 |
| TiO2 | 5 |

Les mélanges des exemples 3 et 4 ainsi qu'un témoin ne contenant pas de pebax 1 ont été vulcanisés en statique sur presse à 180°C sous 90 bars pendant 12 minutes, pour faire des plaques de 2 mm d'épaisseur, les propriétés mécaniques ont été mesurées à 23°C et -35°C sur des éprouvettes réalisées à partir de ces plaques.

Tableau 2 :

| Propriétés du XNBR modifié par du Pebax 1 | | | | | | | |
|---|---|---|---|---|---|---|---|
| **Echantillon** | **Module 50% MPa** | **Module 100% MPa** | **Module 300%MPa** | **Contrainte rupture MPa** | **Résistance déchirement N/mm** | **Allongement rupture % à-35°C** | **Allongement rupture % à 23°C** |
| Témoin2 sans Pebax1 | 1.8 | 2.9 | 9.8 | 14.5 | 33.8 | 25 | 492 |
| Exemple 3 | 2.1 | 3.4 | 10.3 | 13.8 | 34.2 | 34 | 428 |
| Exemple 4 | 2.8 | 4.2 | 10.6 | 15.7 | 38.3 | 64 | 498 |

***Exemple 5***

La formulation de cet exemple a été réalisée directement sur un mélangeur à cylindres selon la composition suivante en parts qui correspond à une teneur de 95% de HNBR pour 5% de Pebax 2 :

| | |
|---|---|
| Zetpol 2000 | 100 |
| Pebax 2 | 5.5 |
| Kaolin calciné | 30 |
| Silane A187 | 1 |
| PEG 4000 | 1 |
| Naugard 445 | 2 |
| Acide stéarique | 0.5 |
| Oxyde de zinc | 3 |
| Perkadox 1440 | 6 |
| TiO2 | 5 |

***Exemple 6***

On procède de la même façon que dans l'exemple 5 en suivant la composition ci-dessous (90% HNBR / 10% Pebax 2):

| | |
|---|---|
| Zetpol 2000 | 100 |
| Pebax 2 | 11.1 |
| Kaolin calciné | 30 |
| Silane A187 | 1 |
| PEG 4000 | 1 |
| Naugard 445 | 2 |
| Acide stéarique | 0.55 |
| Oxyde de zinc | 3.3 |
| Perkadox 1440 | 6.7 |
| TiO2 | 5 |

***Exemple 7***

On procède de la même façon que dans l'exemple 5 en suivant la composition ci-dessous (80% HNBR / 20% Pebax 2):

| | |
|---|---|
| Zetpol 2000 | 100 |
| Pebax 2 | 25 |
| Kaolin calciné | 30 |
| Silane A187 | 1 |
| PEG 4000 | 1 |
| Naugard 445 | 2 |
| Acide stéarique | 0.65 |
| Oxyde de zinc | 3.75 |
| Perkadox 1440 | 7.5 |
| TiO2 | 5 |

L'augmentation du green strength et l'aspect processing aid ont été mis en évidence sur les formulations des exemples 5, 6 et 7 par des mesures de module à faibles allongements avant la vulcanisation.

Tableau 3 :

| Propriétés à cru du HNBR modifié par du Pebax 2 | | | |
|---|---|---|---|
| **Echantillon** | **Module50% MPa** | **Module100% MPa** | **Module300% MPa** |
| Témoin3 sans Pebax2 | 0.82 | 0.85 | 1.06 |
| Exemple 5 | 0.89 | 0.87 | 0.90 |
| Exemple 6 | 1.13 | 1.21 | 1.58 |
| Exemple 7 | 2.43 | 2.84 | 3.03 |

Les mélanges des exemples 5, 6 et 7 ainsi qu'un témoin ne contenant pas de Pebax 2 ont ensuite été vulcanisés en statique sur presse à 180°C sous 90 bars pendant 12 minutes, pour faire des plaques de 2 mm d'épaisseur. les propriétés mécaniques ont été mesurées à 23°C sur des éprouvettes réalisées à partir de ces plaques.

Tableau 4 :

| Propriétés du HNBR modifié par du Pebax 2 | | | | | | | |
|---|---|---|---|---|---|---|---|
| Echantillon | Module 50% MPa | Module 100% MPa | Module 300 %MPa | Contrainte rupture MPa | Allongement rupture % | Dureté shore A | DRC 22h, 100°C |
| Témoin3 sans Pebax2 | 1.06 | 1.32 | 3.63 | 12.92 | 641 | 56 | 32 |
| Exemple 5 | 1.21 | 1.64 | 5.85 | 12.55 | 592 | 60 | 31.5 |
| Exemple 6 | 1.47 | 2.09 | 7.16 | 14.23 | 541 | 65 | 30.5 |
| Exemple 7 | 2.35 | 3.41 | 9.53 | 13.90 | 442 | 75 | 32 |

***Exemple 8***

La formulation de cet exemple a été réalisée directement sur un mélangeur à cylindres selon la composition suivante en parts qui correspond à 95% de XNBR pour 5% de Pebax 2 :

| | |
|---|---|
| XNBR PX7439 | 110 |
| Pebax 2 | 5.5 |
| Kaolin calciné | 20 |
| Silane A187 | 1 |
| PEG 4000 | 1 |
| Naugard 445 | 2 |
| Acide stéarique | 0.5 |
| Oxyde de zinc | 3 |
| Perkadox 1440 | 0.8 |
| TiO2 | 5 |

***Exemple 9***

On procède de la même façon que dans l'exemple 8 en suivant la composition ci-dessous (90% XNBR / 10% Pebax 2):

| | |
|---|---|
| XNBR PX7439 | 110 |
| Pebax 2 | 11.1 |
| Kaolin calciné | 20 |
| Silane A187 | 1 |

(suite)

| | |
|---|---|
| PEG 4000 | 1 |
| Naugard 445 | 2 |
| Acide stéarique | 0.55 |
| Oxyde de zinc | 3.3 |
| Perkadox 1440 | 0.83 |
| TiO2 | 5 |

***Exemple 10***

On procède de la même façon que dans l'exemple 8 en suivant la composition ci-dessous (80% XNBR / 20% Pebax 2):

| | |
|---|---|
| XNBR PX7439 | 110 |
| Pebax 2 | 25 |
| Kaolin calciné | 20 |
| Silane A187 | 1 |
| PEG 4000 | 1 |
| Naugard 445 | 2 |
| Acide stéarique | 0.65 |
| Oxyde de zinc | 3.75 |
| Perkadox 1440 | 0.94 |
| TiO2 | 5 |

Les mélanges des exemples 8, 9 et 10 ainsi qu'un témoin ne contenant pas de pebax 2 ont été vulcanisés en statique sur presse à 180°C sous 90 bars pendant 12 minutes, pour faire des plaques de 2 mm d'épaisseur. les propriétés mécaniques ont été mesurées à 23°C sur des éprouvettes réalisées à partir de ces plaques.

Tableau 5 :

| Propriétés du XNBR modifié par du Pebax 2 | | | | | | | |
|---|---|---|---|---|---|---|---|
| **Echantillon** | **Module 50% MPa** | **Module 100% MPa** | **Module 300% MPa** | **Contrainte rupture MPa** | **Allongement rupture %** | **Dureté shore A** | **DRC 22h, 100°C** |
| Témoin4 sans Pebax 2 | 1.08 | 1.51 | 4.36 | 11.51 | 611 | 65 | 27.5 |
| Exemple 8 | 1.33 | 1.99 | 6.00 | 12.74 | 566 | 68 | 30 |
| Exemple 9 | 1.77 | 2.84 | 8.30 | 15.05 | 534 | 70 | 34 |
| Exemple 10 | 2.85 | 4.63 | 10.87 | 17.58 | 492 | 75 | 36 |

***Exemple 11***

La formulation de cet exemple a été réalisée directement sur un mélangeur à cylindres selon la composition suivante en parts qui correspond à 95% d'ECOT pour 5% de Pebax 2 :

| | |
|---|---|
| HYDRIN T70X1 | 100 |
| Pebax 2 | 5.5 |
| Kaolin calciné | 30 |
| Silane A187 | 1 |
| PEG 4000 | 1 |
| Naugard 445 | 2 |
| Acide stéarique | 1 |

(suite)

| | |
|---|---|
| Maglite D | 3 |
| Zisnet F | 1.2 |
| CaCO3 | 5 |
| TiO2 | 5 |

***Exemple 12***

On procède de la même façon que dans l'exemple 11 en suivant la composition ci-dessous (90% ECOT / 10% Pebax 2):

| | |
|---|---|
| HYDRIN T70X1 | 100 |
| Pebax 2 | 11.1 |
| Kaolin calciné | 30 |
| Silane A187 | 1 |
| PEG 4000 | 1 |
| Naugard 445 | 2 |
| Acide stéarique | 1 |
| Maglite D | 3 |
| Zisnet F | 1.5 |
| CaCO3 | 5 |
| TiO2 | 5 |

***Exemple 13***

On procède de la même façon que dans l'exemple 11 en suivant la composition ci-dessous (80% ECOT / 20% Pebax 2):

| | |
|---|---|
| HYDRIN T70X1 | 100 |
| Pebax 2 | 25 |
| Kaolin calciné | 30 |
| Silane A187 | 1 |
| PEG 4000 | 1 |
| Naugard 445 | 2 |
| Acide stéarique | 1 |
| Maglite D | 3 |
| Zisnet F | 1.7 |
| CaCO3 | 5 |
| TiO2 | 5 |

Les mélanges des exemples 11, 12 et 13 ainsi qu'un témoin ne contenant pas de pebax 2 ont été vulcanisés en statique sur presse à 180°C sous 90 bars pendant 12 minutes, pour faire des plaques de 2 mm d'épaisseur. les propriétés mécaniques ont été mesurées à 23°C sur des éprouvettes réalisées à partir de ces plaques.

Tableau 6 :

| Propriétés de l'ECOT modifié par du Pebax 2 | | | | | | | |
|---|---|---|---|---|---|---|---|
| **Echantillon** | **Module 50% MPa** | **Module 100 % MPa** | **Module 300 % MPa** | **Contrainte rupture MPa** | **Allongement rupture %** | **Dureté shore A** | **DRC % 22h, 100°C** |
| Témoin 5 sansPebax 2 | 0.89 | 1.50 | 4.97 | 5.74 | 337 | 49 | 8 |
| Exemple 11 | 1.24 | 2.29 | - | 5.54 | 225 | 57 | 13 |

Tableau 6 : (suite)

| Propriétés de l'ECOT modifié par du Pebax 2 | | | | | | | |
|---|---|---|---|---|---|---|---|
| **Echantillon** | **Module 50% MPa** | **Module 100 % MPa** | **Module 300 % MPa** | **Contrainte rupture MPa** | **Allongement rupture %** | **Dureté shore A** | **DRC % 22h, 100°C** |
| Exemple 12 | 2.00 | 3.80 | - | 6.59 | 183 | 65 | 23 |
| Exemple 13 | 3.05 | 5.27 | - | 7.62 | 166 | 77 | 32.5 |

***Exemple 14***

Sur cylindres, on formule le XNBR selon la composition suivante en parts

| | |
|---|---|
| XNBR PX7439 | 110 |
| CaCO3 | 30 |
| PEG 4000 | 3 |
| Naugard 445 | 2 |
| Acide stéarique | 0.5 |
| Oxyde de zinc | 3 |

Dans un malaxeur Brabender, on malaxe pendant 7 à 8 minutes à 200°C, 88.7% de XNBR formulé et 10% de Pebax 3. On laisse refroidir et on ajoute sur cylindres 1.3% de Peroxymon F40.

***Exemple 15***

Dans un malaxeur Brabender, on malaxe pendant 7 à 8 minutes à 200°C, 78.9% de XNBR formulé selon l'exemple 14 et 20% de Pebax 3. On laisse refroidir et on ajoute sur cylindres 1.1% de Peroxymon F40.

***Exemple 16***

Dans un malaxeur Brabender, on malaxe pendant 7 à 8 minutes à 200°C, 69% de XNBR formulé selon l'exemple 14 et 30% de Pebax 3. On laisse refroidir et on ajoute sur cylindres 1% de Peroxymon F40.

Les mélanges des exemples 14, 15 et 16 ainsi qu'un témoin ne contenant pas de Pebax 3 ont été vulcanisés en statique sur presse à 180°C sous 90 bars pendant 12 minutes, pour faire des plaques de 2 mm d'épaisseur. Les propriétés mécaniques ont été mesurées à 23°C sur des éprouvettes réalisées à partir de ces plaques.

Tableau 7 :

| Propriétés du XNBR modifié par du Pebax 3 | | | | | | | | |
|---|---|---|---|---|---|---|---|---|
| **Echantillon** | **Module 50% MPa** | **Module 100 % MPa** | **Module 300 % MPa** | **Contrainte rupture MPa** | **Allongement rupture %** | **Rés. déchirure N/mm** | **Dureté shore A** | **DRC % 22h, 100°C** |
| Témoin 6 sansPebax 3 | 1.04 | 1.46 | 3.14 | 12.10 | 500 | 21.6 | 53 | 10 |
| Exemple 14 | 1.75 | 2.63 | 6.81 | 14.60 | 450 | 30.2 | 60 | 18 |
| Exemple 15 | 2.58 | 4.36 | 7.82 | 19.90 | 430 | 42.4 | 66 | 26 |
| Exemple 16 | 4.03 | 6.66 | 17.10 | 22.10 | 390 | 53.8 | 74 | 34 |

***Exemple 17***

Dans un malaxeur Brabender, on malaxe pendant 7 à 8 minutes à 200°C, 89.7% de XNBR formulé selon l'exemple 14 et 10% de Pebax 4. On laisse refroidir et on ajoute sur cylindres 1.3% de Peroxymon F40.

***Exemple 18***

Dans un malaxeur Brabender, on malaxe pendant 7 à 8 minutes à 200°C, 78.9% de XNBR formulé selon l'exemple 14 et 20% de Pebax 4. On laisse refroidir et on ajoute sur cylindres 1.1% de Peroxymon F40.

***Exemple 19***

Dans un malaxeur Brabender, on malaxe pendant 7 à 8 minutes à 200°C, 69% de XNBR formulé selon l'exemple 14 et 30% de Pebax 4. On laisse refroidir et on ajoute sur cylindres 1% de Peroxymon F40.

Les mélanges des exemples 17, 18 et 19 ainsi qu'un témoin ne contenant pas de Pebax 4 ont été vulcanisés en statique sur presse à 180°C sous 90 bars pendant 12 minutes, pour faire des plaques de 2 mm d'épaisseur. Les propriétés mécaniques ont été mesurées à 23°C sur des éprouvettes réalisées à partir de ces plaques.

Tableau 8 :

| Propriétés du XNBR modifié par du Pebax 4 | | | | | | | | |
|---|---|---|---|---|---|---|---|---|
| **Echantillon** | **Module 50% MPa** | **Module 100 % MPa** | **Module 300 % MPa** | **Contrainte rupture MPa** | **Allongement rupture %** | **Rés. déchirure N/mm** | **Dureté shore A** | **DRC % 22h, 100°C** |
| Témoin 6 sansPebax 4 | 1.04 | 1.46 | 3.14 | 12.10 | 500 | 21.6 | 53 | 10 |
| Exemple 17 | 1.98 | 3.50 | 11.9 | 17.80 | 380 | 30.9 | 61 | 13 |
| Exemple 18 | 3.59 | 6.87 | 19.30 | 21.50 | 330 | 42.5 | 70 | 17 |
| Exemple 19 | 6.76 | 13.02 | 22.40 | 27.00 | 260 | 54.8 | 80 | 20 |

***Exemple 20***

Dans un malaxeur Brabender, on malaxe pendant 7 à 8 minutes à 190°C, 89.7% de XNBR formulé selon l'exemple 14 et 10% de PA11. On laisse refroidir et on ajoute sur cylindres 1.3% de Peroxymon F40.

***Exemple 21***

Dans un malaxeur Brabender, on malaxe pendant 7 à 8 minutes à 190°C, 78.9% de XNBR formulé selon l'exemple 14 et 20% de PA11. On laisse refroidir et on ajoute sur cylindres 1.1% de Peroxymon F40.

***Exemple 22***

Dans un malaxeur Brabender, on malaxe pendant 7 à 8 minutes à 190°C, 69% de XNBR formulé selon l'exemple 14 et 30% de PA11. On laisse refroidir et on ajoute sur cylindres 1% de Peroxymon F40.

Les mélanges des exemples 20, 21 et 22 ainsi qu'un témoin ne contenant pas de PA11 ont été vulcanisés en statique sur presse à 180°C sous 90 bars pendant 12 minutes, pour faire des plaques de 2 mm d'épaisseur. Les propriétés mécaniques ont été mesurées à 23°C sur des éprouvettes réalisées à partir de ces plaques.

Tableau 9 :

| Propriétés du XNBR modifié par du PA11 | | | | | | | | |
|---|---|---|---|---|---|---|---|---|
| **Echantillon** | **Module 50% MPa** | **Module 100 % MPa** | **Module 300 % MPa** | **Contrainte rupture MPa** | **Allongement rupture %** | **Rés. déchirure N/mm** | **Dureté shore A** | **DRC % 22h, 100°C** |
| Témoin 6 sans PA11 | 1.04 | 1.46 | 3.14 | 12.10 | 500 | 21.6 | 53 | 10 |
| Exemple 20 | 2.08 | 3.39 | 10.1 | 17.1 | 410 | 35.0 | 63 | 14 |
| Exemple 21 | 4.57 | 7.74 | 18.90 | 21.60 | 340 | 47.0 | 77 | 18 |
| Exemple 22 | 13.33 | 22.2 | - | 27.60 | 150 | 54.8 | 88 | 24 |

***Exemple 23***

Dans un malaxeur Brabender, on malaxe pendant 7 à 8 minutes à 190°C, 89.7% de XNBR formulé selon l'exemple 14 et 10% de PA12. On laisse refroidir et on ajoute sur cylindres 1.3% de Peroxymon F40.

***Exemple 24***

Dans un malaxeur Brabender, on malaxe pendant 7 à 8 minutes à 190°C, 78.9% de XNBR formulé selon l'exemple 14 et 20% de PA12. On laisse refroidir et on ajoute sur cylindres 1.1% de Peroxymon F40.

***Exemple 25***

Dans un malaxeur Brabender, on malaxe pendant 7 à 8 minutes à 190°C, 69% de XNBR formulé selon l'exemple 14 et 30% de PA12. On laisse refroidir et on ajoute sur cylindres 1% de Peroxymon F40.

Les mélanges des exemples 23, 24 et 25 ainsi qu'un témoin ne contenant pas de PA12 ont été vulcanisés en statique sur presse à 180°C sous 90 bars pendant 12 minutes, pour faire des plaques de 2 mm d'épaisseur. Les propriétés mécaniques ont été mesurées à 23°C sur des éprouvettes réalisées à partir de ces plaques.

Tableau 10 :

| Propriétés du XNBR modifié par du PA12 | | | | | | | | |
|---|---|---|---|---|---|---|---|---|
| **Echantillon** | **Module 50% MPa** | **Module 100 % MPa** | **Module 300 % MPa** | **Contrainte rupture MPa** | **Allongement rupture %** | **Rés. déchirure N/mm** | **Dureté shore A** | **DRC % 22h, 100°C** |
| Témoin 6 sans PA12 | 1.04 | 1.46 | 3.14 | 12.10 | 500 | 21.6 | 53 | 10 |
| Exemple 23 | 1.92 | 3.08 | 8.30 | 16.70 | 430 | 31.4 | 62 | 15 |
| Exemple 24 | 4.17 | 6.49 | 13.60 | 20.10 | 400 | 41.8 | 75 | 21 |
| Exemple 25 | 8.41 | 11.95 | - | 22.10 | 300 | 52.4 | 86 | 27 |

Les exemples suivants ont été réalisés dans un but comparatif. En effet, à la formulation de XNBR de l'exemple 14, on a additionné différents taux de noir de carbone FEF N550 afin de comparer l'effet renforçant des thermoplastiques à celui d'un noir.

***Exemple 26***

Sur cylindres, on formule le XNBR selon la composition suivante en parts :

| | |
|---|---|
| XNBR PX7439 | 110 |
| CaCO3 | 30 |
| N550 | 10 |
| PEG 4000 | 3 |
| Naugard 4452 | |
| Acide stéarique | 0.5 |
| Oxyde de zinc | 3 |
| Peroxymon F40 | 2 |

***Exemple 27***

On effectue la même formulation que dans l'exemple 26 en introduisant 20 parts de noir FEF N550 à la place de 10.

***Exemple 28***

On effectue la même formulation que dans l'exemple 26 en introduisant 30 parts de noir FEF N550 à la place de 10.

Les mélanges des exemples 26, 27 et 28 ainsi qu'un témoin ne contenant pas de noir ont été vulcanisés en statique sur presse à 180°C sous 90 bars pendant 12 minutes, pour faire des plaques de 2 mm d'épaisseur. Les propriétés mécaniques ont été mesurées à 23°C sur des éprouvettes réalisées à partir de ces plaques.

Tableau 11 :

| Propriétés du XNBR renforcé par du noir FEF N550 Propriétés du XNBR renforcé par du noir FEF N550 | | | | | |
|---|---|---|---|---|---|
| **Echantillon** | **Module 50% MPa** | **Module 100 % MPa** | **Module 300 % MPa** | **Rés. déchirure N/mm** | **Dureté shore A** |
| Témoin 6 sans noir | 1.04 | 1.46 | 3.14 | 21.6 | 53 |
| Exemple 26 | 1.71 | 2.58 | 7.61 | 29.1 | 62 |
| Exemple 27 | 2.14 | 3.42 | 11.70 | 33.0 | 67 |
| Exemple 28 | 3.00 | 5.14 | 18.19 | 28.1 | 72 |

**Propriétés dynamiques**

Dans cette partie, on a cherché à comparer les propriétés dynamiques des mélanges XNBR renforcés par le Pebax 3, préparés dans les exemples 14, 15 et 16 aux propriétés dynamiques des XNBR renforcés par différents taux de noir et préparés dans les exemples 26, 27,28.

En effet, pour ces exemples, les taux de renforcements (voir tableaux 7 et 11) et les duretés sont équivalents pour les mélanges chargés de thermoplastiques et ceux chargés au noir.

Dans un premier test, on a comparé les aires d'hystérèse développées entre des mélanges chargés au noir et des caoutchoucs modifiés par du Pebax 3 au cours d'une expérience de traction allant jusqu'à 90% de déformation des éprouvettes (130 mm x 2mm).

Tableau 12 :

| Valeurs comparatives d'hystérèse entre des mélanges chargés au noir et des caoutchoucs modifiés par des thermoplastiques | | | |
|---|---|---|---|
| Mélanges au noir | | Mélanges avec du Pebax 3 | |
| Echantillon | % Hystérèse[1] | Echantillon | % Hystérèse[1] |
| Exemple 26 | 35 | Exemple 14 | 26 |
| Exemple 27 | 38 | Exemple 15 | 28 |
| Exemple 28 | 42 | Exemple 16 | 29 |

[1] dans tous les cas la valeur d'hystérèse a été mesurée après 5 cycles de déformation.

Un deuxième test comparatif entre ces mêmes mélanges a été effectué selon la norme NFT 46.045. Des plots cylindriques (d = 17.8 mm, h = 25 mm) ont été soumis à une sollicitation dynamique en compression (compression de 250N, déformation de 1 mm d'amplitude, balayage en fréquence de 0 à 50Hz). L'évolution de tangente δ, appelée coefficient de perte a été observée en fonction de la fréquence et on remarque une forte diminution de tangente δ pour les mélanges modifiés par des thermoplastiques, ceci est caractéristique d'un échauffement interne plus faible.

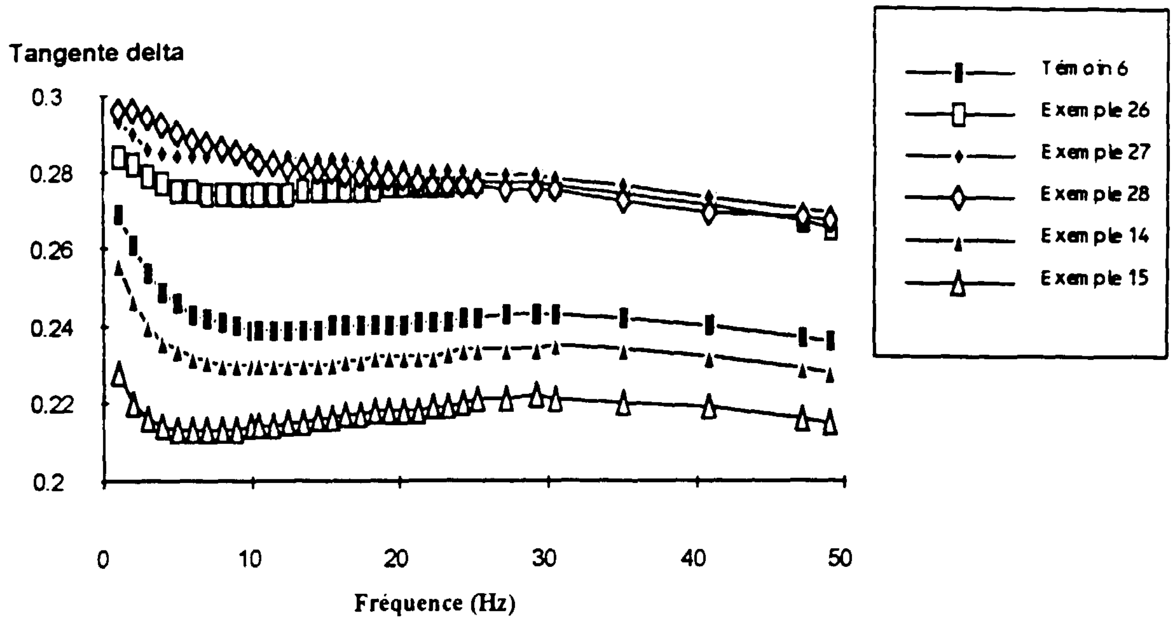


**Tenue aux huiles**

La tenue aux huiles a été mesurée selon le principe de la norme ASTM D471 en plongeant les mélanges des exemples 5,6,7,8,9,10,11,12,13 ainsi que leur témoin dans de l'huile ASTM 3 pendant 7 jours à 100°C et en mesurant leur % de gonflement.

Tableau 13 :

| tenue aux huiles des caoutchoucs modifiés. | | |
|---|---|---|
| **Référence** | **Composition** | **% de gonflement** |
| Témoin 3 | 100% HNBR | 21 |
| Exemple 5 | 95% HNBR / 5% Pebax 2 | 20 |
| Exemple 6 | 90% HNBR / 10% Pebax 2 | 19 |
| Exemple 7 | 80% HNBR / 20% Pebax 2 | 17 |

Tableau 13 : (suite)

| tenue aux huiles des caoutchoucs modifiés. | | |
|---|---|---|
| **Référence** | **Composition** | **% de gonflement** |
| Témoin 4 | 100% XNBR | 18 |
| Exemple 8 | 95% XNBR / 5% Pebax 2 | 17.5 |
| Exemple 9 | 90% XNBR /10% Pebax 2 | 16 |
| Exemple 10 | 80% XNBR / 20% Pebax 2 | 15 |
| Témoin 5 | 100% ECOT | 11 |
| Exemple 11 | 95% ECOT / 5% Pebax 2 | 10.5 |
| Exemple 12 | 90% ECOT / 10% Pebax 2 | 10 |
| Exemple 13 | 80% ECOT / 20% Pebax 2 | 9 |

## Revendications

**1.** Mélange vulcanisé

(i) d'au moins un caoutchouc fonctionnalisé choisi parmi le NBR (nitrile - butadiène), le H-NBR (nitrile - butadiène hydrogéné), le X-NBR (nitrile - butadiène carboxylé) et les caoutchoucs épichlorhydrine et
(ii) au moins un thermoplastique en quantité suffisante pour augmenter le module aux faibles allongements mais telle que la contrainte à la rupture n'est pas diminuée de plus de 10 %.

Le caoutchouc (i) formant la matrice dans laquelle est dispersé le thermoplastique (ii) sous forme de nodules.

**2.** Mélange selon la revendication 1 dans lequel la quantité de thermoplastique est de 5 à 50 parties pour 100 parties de caoutchouc non formulé.

**3.** Mélange selon l'une quelconque des revendications précédentes dans lequel le thermoplastique est choisi parmi les polyamides et les polymères à blocs polyamides et blocs polyéthers.

**4.** Mélange selon la revendication 3 dans lequel le polyamide est choisi parmi le polyamide 11 et le polyamide 12.

**5.** Mélange selon la revendication 3 dans lequel le polymère à blocs polyamides et blocs polyéthers est choisi parmi les polymères à blocs polyamide 12 et blocs polytetra méthylène glycol (PTMG) et les polymères à blocs polyamide 6 et blocs PTMG.

**6.** Procédé de préparation des mélanges selon l'une quelconque des revendications précédentes dans lequel on incorpore le thermoplastique à l'état fondu dans le caoutchouc non vulcanisé jusqu'à obtenir sa dispersion dans la matrice de caoutchouc puis on effectue la vulcanisation en statique.

## Patentansprüche

**1.** Vulkanisiertes Gemisch

(i) mindestens eines Kautschuks, der funktionelle Gruppen aufweist, der unter den NBRs (Nitril-Butadien-Kautschuke), den H-NBRs (hydrierte Nitril-Butadien-Kautschuke), den X-NBRs (Carboxygruppen enthaltende Nitril-Butadien-Kautschuke) und den Epichlorhydrin-Kautschuken ausgewählt ist, und
(ii) mindestens eines Thermoplasten in einer Menge, die ausreichen ist, um den Modul bei geringen Dehnungen zu vergrößern, die jedoch so ist, daß die Reißfestigkeit um nicht mehr als 10 % verringert wird,

wobei der Kautschuk (i) die Matrix bildet, in der der Thermoplast (ii) in Form von Kügelchen verteilt ist.

**2.** Gemisch nach Anspruch 1, wobei die Menge an Thermoplast 5 bis 50 Teile pro 100 Teile nicht formulierter Kautschuk beträgt.

3. Gemisch nach einem der vorhergehenden Ansprüche, wobei der Thermoplast unter Polyamiden und Polymeren mit Polyamid-Blöcken und Polyether-Blöcken ausgewählt ist.

4. Gemisch nach Anspruch 3, wobei das Polyamid unter Polyamid 11 und Polyamid 12 ausgewählt ist.

5. Gemisch nach Anspruch 3, wobei das Polymer mit Polyamid-Blökken und Polyether-Blöcken unter Polymeren mit Polyamid-12-Blöcken und Polytetramethylenglykol-Blöcken (PTMG) und Polymeren mit Polyamid-6-Blöcken und PTMG-Blöcken ausgewählt ist.

6. Verfahren zur Herstellung der Gemische nach einem der vorhergehenden Ansprüche, wobei der Thermoplast im geschmolzenem Zustand zu dem nicht vulkanisierten Kautschuk gegeben wird, bis seine Verteilung in der Kautschukmatrix erreicht ist, wonach die Vulkanisation in statischem Zustand durchgeführt wird.

## Claims

1. Vulcanized compound (i) of at least one functionalized rubber chosen from NBR (nitrite - butadiene), H-NBR (hydrogenated nitrile - butadiene), X-NBR (carboxylated nitrile - butadiene) and epichlorohydrin rubbers and (ii) at least one thermoplastic in an amount sufficient to increase the modulus at low elongations, but such that the tensile strength is not reduced by more than 10%, the rubber (i) forming the matrix in which the thermoplastic (ii) is dispersed in the form of nodules.

2. Compound according to Claim 1, in which the amount of thermoplastic is from 5 to 50 parts per 100 parts of unformulated rubber.

3. Compound according to any one of the preceding claims, in which the thermoplastic is chosen from polyamides and polymers containing polyamide blocks and polyether blocks.

4. Compound according to Claim 3, in which the polyamide is chosen from nylon-11 and nylon-12.

5. Compound according to Claim 3, in which the polymer containing polyamide blocks and polyether blocks is chosen from polymers containing nylon-12 blocks and polytetramethylene glycol (PTMG) blocks and polymers containing nylon-6 blocks and PTMG blocks.

6. Process for preparing the compounds according to any one of the preceding claims, in which the thermoplastic is incorporated in the melt state into the unvulcanized rubber until it is dispersed in the rubber matrix and then static vulcanization is carried out.